# EUROPÄISCHE PATENTSCHRIFT

(11) **EP 0 934 841 B1**
(45) Veröffentlichungstag und Bekanntmachung des Hinweises auf die Patenterteilung: **31.03.2004**
(21) Anmeldenummer: 98124683.8
(22) Anmeldetag: 24.12.1998
(51) Int. Cl.: B60J 3/02, B60H 1/24

(54) **Sonnenblende für ein Kraftfahrzeug**
Sun visor for a motor vehicle
Pare-soleil pour un véhicule à moteur

(30) Priorität: 07.02.1998 DE 19804984
(43) Veröffentlichungstag der Anmeldung: 11.08.1999
(73) Patentinhaber: DaimlerChrysler AG, 70567 Stuttgart (DE)
(72) Erfinder: Weber, Norbert, 71149 Bondorf (DE)

(56) Entgegenhaltungen:
- DE-A- 3 316 817
- DE-A- 4 026 650
- US-A- 2 301 512
- US-A- 5 174 522

## Beschreibung

Die Erfindung betrifft eine Sonnenblende für ein Kraftfahrzeug mit den Merkmalen des Oberbegriffes des Anspruches 1.

Eine derartige gattungsgemäße Sonnenblende ist aus der DE 33 16 817 C2 bekannt. Die bekannte Sonnenblende ist als Hohlkörper ausgebildet, der einerseits über eine Vielzahl von Öffnungen in einer der Außenseiten der Sonnenblende einen Luftaustausch zwischen dem Inneren der Sonnenblende und dem Fahrzeuginnenraum ermöglicht. Andererseits ist das Innere der bekannten Sonnenblende über ein Rohr, mit dem die Sonnenblende am Fahrzeug verstellbar befestigt ist, an eine Klimatisierungseinrichtung angeschlossen. Auf diese Weise kann mit der bekannten Sonnenblende wahlweise eine Belüftung oder eine Entlüftung des Fahrzeuginnenraumes erreicht werden.

Die vorliegende Erfindung beschäftigt sich mit dem Problem, für eine Sonnenblende der eingangs genannten Art eine zweckmäßige Ausgestaltung anzugeben.

Dieses Problem wird erfindungsgemäß durch eine Sonnenblende mit den kennzeichnenden Merkmalen des Anspruches 1 gelöst. Hierbei wird vorgeschlagen, in der dachseitigen Außenseite der Sonnenblende eine Öffnung für den Luftaustausch zu schaffen und diese nur für den Fall, daß die Sonnenblende nach oben geklappt ist, d.h. einen im wesentlichen zum Fahrzeugdach parallelen Verlauf aufweist, mit einer zu diesem Zweck im Dach des Fahrzeuges angeordneten Anschlußöffnung einer Klimatisierungseinrichtung des Kraftfahrzeuges zu verbinden. Die vorgeschlagene Maßnahme ermöglicht die Ausbildung eines großflächigen Luftanschlusses der Sonnenblende an die Klimatisierungseinrichtung des Fahrzeuges, wodurch auch bei einem relativ großen Luftvolumenstrom nur geringe Strömungsgeschwindigkeiten auftreten. Dies hat z.B. eine Komfortsteigerung zur Folge, da eine Luftströmung mit niedriger Strömungsgeschwindigkeit keine störenden Geräusche verursacht. Außerdem besteht die Möglichkeit, die in das Fahrzeugdach integrierte Anschlußöffnung bei heruntergeklappter Sonnenblende direkt als zusätzliche Luftungsöffnung der Klimatisierungseinrichtung zu verwenden. Z.B. kann durch eine derartige im Dachbereich angeordnete große Öffnung ein rascher Abzug insbesondere von Zigarettenrauch durchgeführt werden.

Bei einer vorteilhaften Ausgestaltung der erfindungsgemäßen Sonnenblende kann vorgesehen sein, daß in der Ausnehmung eine gegenüber der dachseitigen Außenseite der Sonnenblende vertieft angeordnete, im wesentlichen parallel zu dieser Außenseite verlaufende Platte vorgesehen ist, wobei zwischen der Außenkante dieser Platte und dem Umfang der Ausnehmung eine Spaltöffnung ausgebildet ist, die mit dem Inneren der Sonnenblende kommuniziert. Durch eine derartige Spaltöffnung kann ein großer Durchströmungsquerschnitt gewährleistet werden. Außerdem ist der auf der Platte zur Verfügung gestellte Platz vorteilhaft ausnutzbar, insbesondere kann auf der Platte ein Kosmetikspiegel angebracht werden.

Entsprechend einer anderen bevorzugten Ausführungform der erfindungsgemäßen Sonnenblende kann die Außenseite der Sonnenblende zumindest bereichsweise aus einem luftdurchlässigen Material gebildet oder mit einer luftdurchlässigen Auflage oder Schicht ausgestattet sein, mit dem bzw. mit der die Lüftungsöffnungen der Sonnenblende überdeckt werden. Bei direkt an der Außenseite der Sonnenblende mündenden Lüftungsöffnungen können sich im Falle einer Frischluftzuführung in den Fahrzeuginnenraum in diesem Luftströmungen (Zugluft) ausbilden, was von den Insassen zumindest auf Dauer als unangenehm empfunden wird. Im Unterschied dazu ist es mit Hilfe der vorgeschlagenen Maßnahmen möglich, Frischluft mehr oder weniger ungerichtet, diffus in den Fahrzeuginnenraum einzublasen. Damit kann eine Frischluftzufuhr bzw. eine Luftzirkulation gewährleistet werden, ohne daß sich dabei unangenehme Strömungen im Fahrzeuginnenraum ausbilden können.

Bei einer anderen Ausführungsform kann die im Dach bzw. Himmel des Fahrzeuges vorgesehene Anschlußöffnung mit verstellbaren Lamellen versehen sein, wodurch bei aus ihrer ersten Endstellung verstellter Sonnenblende eine zusätzliche Be- bzw. Entlüftungsdüse für die Klimatisierungseinrichtung zur Verfügung steht, deren Strömungsmenge und -richtung einstellbar ist.

Weitere wichtige Merkmale und Vorteile der Erfindung ergeben sich aus den Unteransprüchen, aus den Zeichnen und aus der nachfolgenden Beschreibung einer bevorzugten Ausführungsform. Es zeigen, jeweils schematisch,
- Fig. 1: eine geschnittene Seitenansicht auf eine erfindungsgemäße Sonnenblende in einer ersten Endstellung, in der die Sonnenblende im wesentlichen parallel zu einem Fahrzeugdach verläuft, und
- Fig. 2: eine perspektivische Draufsicht auf eine aus ihrer ersten Endstellung heruntergeklappten Sonnenblende nach der Erfindung.

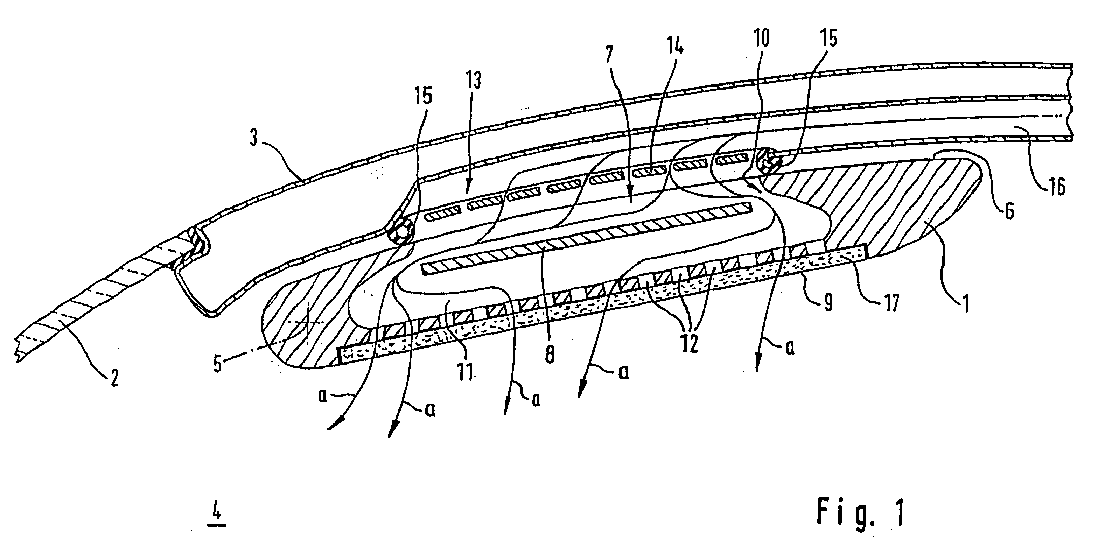

Entsprechend Fig. 1 ist eine erfindungsgemäße Sonnenblende 1 in der üblichen Weise im Bereich einer Frontscheibe 2 auf der Innenseite eines Fahrzeugdaches 3 in einem Fahrzeuginnenraum 4 eines im übrigen nicht dargestellten Kraftfahrzeuges angeordnet. Die Sonnenblende 1 ist dabei um eine etwa quer zur Fahrzeuglängsrichtung verlaufende Achse 5 schwenkbar gelagert und zwischen einer ersten Endstellung, in der sie im wesentlichen parallel zur Innenseite des Fahrzeugdaches 3 verläuft, und zwischen einer zweiten Endstellung beliebig verstellbar, in der sie im wesentlichen parallel zur Frontscheibe 2 verläuft.

Auf einer dem Fahrzeugdach 3 zugewandten Außenseite 6 der Sonnenblende 1 ist eine Ausnehmung 7 vorgesehen, in der eine Platte 8 angeordnet ist. Dabei ist diese Platte 8 gegenüber daran angrenzenden Bereichen der Außenseite 6 vertieft angeordnet und weist einen im wesentlichen zur Außenseite 6 parallelen Verlauf auf. Zwischen dem die Ausnehmung 7 einfassenden Umfang und dem Umfang bzw. der Außenkante der Platte 8 ist eine entlang der Außenkante der Platte 8 verlaufende Spaltöffnung 10 ausgebildet, durch welche die Ausnehmung 7 mit einem Inneren 11 der Sonnenblende 1 kommuniziert. Das Innere 11 der Sonnenblende 1 kommuniziert außerdem über Lüftungsöffnungen 12 mit einer dem Innenraum 4 des Fahrzeuges zugewandten Außenseite 9 der Sonnenblende 1.

Des weiteren kommuniziert das Innere 11 der Sonnenblende 1 über die Spaltöffnung 10 und die Ausnehmung 7 mit einer dem Fahrzeuginnenraum 4 zugewandten Anschlußöffnung 13 einer im übrigen nicht dargestellten Klimatisierungseinrichtung des Fahrzeuges, wobei die Anschlußöffnung 13 im Dach 3 des Fahrzeuges angeordnet ist. Die Anschlußöffnung 13 ist mit verstellbaren Lamellen 14 versehen, die im Ausführungsbeispiel etwa quer zur Fahrzeuglängsrichtung verlaufen und zur Regulierung des Volumenstromes nach Betrag und Richtung verstellbar ausgebildet sein können.

Im Bereich einer Einfassung der Anschlußöffnung 13 ist entsprechend Fig. 1 am Fahrzeugdach 3 bzw. am Fahrzeughimmel eine Ringdichtung oder Dichtlippe 15 angebracht, die am Umfang der Ausnehmung 7 an der Außenseite 6 der Sonnenblende 1 dichtend zur Anlage kommt, wenn sich die Sonnenblende 1 in ihrer ersten Endstellung gemäß Fig. 1 befindet.

Mit Hilfe verschiedener Pfeile a ist in Fig. 1 eine Belüftungssituation symbolisiert, in welcher der Anschlußöffnung 13 über einen entsprechenden Strömungskanal 16 im Fahrzeugdach 3 von der Klimatisierungseinrichtung z.B. gekühlte Frischluft zugeführt wird. Diese Frischluft tritt durch die Lamellen 14 aus der Anschlußöffnung 13 aus und trifft auf die vertieft angeordnete Platte 8 der Sonnenblende 1, wo sie in die Spaltöffnung 10 umgelenkt wird. Durch die Spaltöffnung 10 gelangt die zugeführte Luft in der Innere 11 der Sonnenblende 1, wo sie sich auf die Lüftungsöffnungen 12 verteilt. Durch die Vielzahl der Lüftungsöffnungen 12 kann dann die zugeführte Frischluft in den Fahrzeuginnenraum 4 von oben eintreten.

Im in Fig. 1 gezeigten Ausführungsbeispiel ist in die dem Fahrzeuginnenraum 4 zugewandte Außenseite 9 der Sonnenblende 1 eine Einlage 17 integriert, die sämtliche Lüftungsöffnungen 12 abdeckt und aus einem luftdurchlässigen Material besteht. Auf diese Weise kann sich durch die Lüftungsöffnungen 12 keine strahlartige, gerichtete Strömung ausbilden. Vielmehr ergibt sich ein relativ diffuser, ungerichteter Luftaustritt.

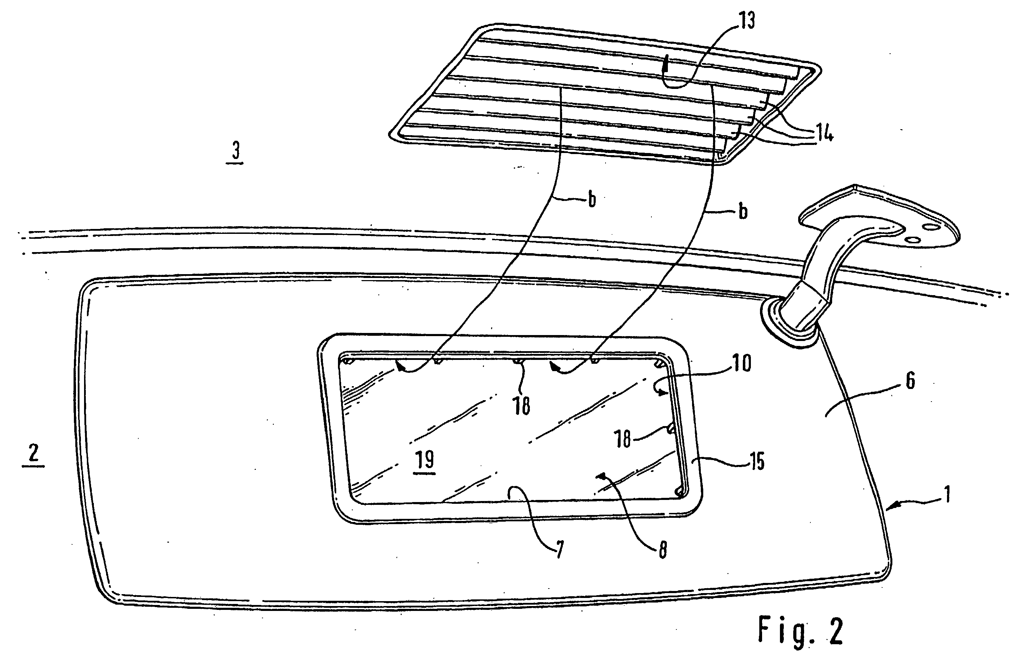

In der Darstellung entsprechend Fig. 2 ist die sich im Umfangsbereich der Ausnehmung 7 zwischen Platte 8 und der dem Fahrzeugdach 3 zugewandten Außenseite 6 der Sonnenblende 1 ausbildende Spaltöffnung 10 deutlich erkennbar. Zusätzlich ist durch die Pfeile b zur Veranschaulichung ein Strömungsweg symbolisiert, der vorliegen kann, wenn die Sonnenblende 1 ihre in Fig. 1 gezeigte erste Endlage einnimmt.

Zur Halterung der Platte 8 sind Stege 18 vorgesehen, mit denen die Platte 8 im Bereich ihrer Außenkante mit dem Innenumfang der Ausnehmung 7 verbunden ist. Bei dem in Fig. 2 gezeigten bevorzugten Ausführungsbeispiel ist in der durch die Anordnung der Platte 8 in der Ausnehmung 7 ausgebildeten Vertiefung auf der.dem Fahrzeugdach 3 zugewandten Außenseite der Platte 8 ein Kosmetikspiegel 19 befestigt, z.B. durch Aufkleben.

In der Ansicht entsprechend Fig. 2 sind außerdem die verstellbaren Lamellen 14 der Anschlußöffnung 13 deutlich erkennbar. Bei heruntergeklappter Sonnenblende 1 kann die Anschlußöffnung 13 wie eine herkömmliche Düse einer Klimatisierungseinrichtung verwendet und bedient werden. Beispielsweise kann bei kurzfristigem erhöhten Belüftungsbedarf eine relativ starke, gerichtete Luftströmung ausgebildet werden.

Im Unterschied zu dem in Fig. 1 dargestellten Ausführungsbeispiel ist bei der Ausführungsform entsprechend Fig. 2 die Dichtung 15 am Umfang der Ausnehmung 7 an der dem Dach 3 zugewandten Außenseite 6 der Sonnenblende 1 befestigt.

## Patentansprüche

1. Sonnenblende (1) für ein Kraftfahrzeug, die wenigstens um eine im wesentlichen quer zu einer Frontscheibe des Kraftfahrzeuges verlaufende Achse (5) zwischen einer ersten Endstellung, in der die Sonnenblende im wesentlichen parallel zu einem Fahrzeugdach (3) verläuft, und einer zweiten Endstellung verschwenkbar ist, in der die Sonnenblende (1) im wesentlichen parallel zur Frontscheibe (2) verläuft, wobei die Sonnenblende Lüftungsöffnungen (12) aufweist, durch die ein Luftaustausch zwischen einem Fahrgastinnenraum (4) und einem an eine Klimatisierungseinrichtung des Kraftfahrzeuges anschließbaren Inneren der Sonnenblende (1) stattfinden kann,
**gekennzeichnet durch folgende Merkmale:**
- in einer dachseitigen Außenseite (6) der Sonnenblende (1) ist eine Ausnehmung (7) vorgesehen, die mit dem Inneren (11) der Sonnenblende (1) kommuniziert, und
- im Fahrzeuginnenraum (4) ist im Fahrzeugdach (3) eine Anschlußöffnung (13) der Klimatisierungseinrichtung angeordnet, wobei die Sonnenblende (1) in ihrer ersten Endstellung so am Fahrzeugdach (3) positionierbar ist, daß die Anschlußöffnung (13) und die Ausnehmung (7) der Sonnenblende (1) einander überdecken.

2. Sonnenblende nach Anspruch 1,
**dadurch gekennzeichnet,**
**daß** Dichtmittel (15) vorgesehen sind, die in der ersten Endstellung der Sonnenblende (1) zwischen dem die Ausnehmung (7) einfassenden Umfang und einer die Anschlußöffnung (13) begrenzenden Einfassung angeordnet ist.

3. Sonnenblende nach Anspruch 2,
**dadurch gekennzeichnet,**
**daß** die Dichtmittel (15) an der Einfassung der Anschlußöffnung (13) angebracht sind und in der ersten Endstellung der Sonnenblende (1) an dem die Ausnehmung (7) einfassenden Umfang an der Sonnenblende (1) dicht zur Anlage kommen.

4. Sonnenblende nach Anspruch 2,
**dadurch gekennzeichnet,**
**daß** die Dichtmittel (15) an dem die Ausnehmung (7) einfassenden Umfang angebracht sind und in der ersten Endstellung der Sonnenblende (1) an der Einfassung der Anschlußöffnung (13) dicht zur Anlage kommen.

5. Sonnenblende nach einem der vorhergehenden Ansprüche,
**dadurch gekennzeichnet,**
**daß** in der Ausnehmung (7) eine gegenüber der dachseitigen Außenseite (6) der Sonnenblende (1) vertieft angeordnete, im wesentlichen parallel zu dieser Außenseite (6) verlaufende Platte (8) vorgesehen ist, wobei zwischen der Außenkante der Platte (8) und dem Umfang der Ausnehmung (7) eine Spaltöffnung (10) ausgebildet ist, die mit dem Inneren (11) der Sonnenblende (1) kommuniziert.

6. Sonnenblende nach Anspruch 5,
**dadurch gekennzeichnet,**
**daß** in der Spaltöffnung (10) Stege (18) angeordnet sind, mit denen die Platte (8) an der Sonnenblende (1) gehalten ist.

7. Sonnenblende nach Anspruch 5 oder 6,
**dadurch gekennzeichnet,**
**daß** in der Ausnehmung (7) auf der Platte (8) ein Kosmetikspiegel (19) angebracht ist.

8. Sonnenblende nach einem der vorhergehenden Ansprüche,
**dadurch gekennzeichnet,**
**daß** die Lüftungsöffnungen (12) in der Sonnenblende (1) sowohl in der fahrzeuginnenraum- bzw. frontscheibenseitigen als auch in der dachseitigen Außenseite (6 und 9) der Sonnenblende (1) angeordnet sind.

9. Sonnenblende nach einem der vorhergehenden Ansprüche,
**dadurch gekennzeichnet,**
**daß** die Außenseiten (6 und 9) der Sonnenblende (1) zumindest teilweise aus einem luftdurchlässigen Material (17) gebildet oder damit versehen sind, das die Lüftungsöffnungen (12) bedeckt.

10. Sonnenblende nach einem der vorhergehenden Ansprüche,
**dadurch gekennzeichnet,**
**daß** die Anschlußöffnung (13) verstellbare Lamellen (14) aufweist.

## Claims

1. Sun shield, for a vehicle, that can swivel, around an axis (5) that is essentially transverse in relation to the windscreen of the vehicle, between a first end position, in which the sun shield runs essentially parallel to a vehicle roof (3), and a second end position in which the sun shield runs essentially parallel to the windscreen (2), whereby the sun shield has ventilation openings (12) through which air-exchange can take place between a passenger and driver interior (4) and an inside, of the sun shield (1), which can be connected to an air-conditioning device of the vehicle,
having the following characteristics:
- a recess (7) is provided, in a roof-side outer side (6) of the sun shield (1), which communicates with the inside (11) of the sun shield (1), and
- a connection opening (13) of the air-conditioning device is disposed in the vehicle interior (4) in the roof (3) of the vehicle, whereby the sun shield (1) can, in its first end position, be positioned on the roof of the vehicle such that the connection opening (13) and the recess (7) of the sun shield (1) are superimposed.

2. Sun shield in accordance with claim 1,
**characterized in that**
sealing means (15) are provided that, in the first end position of the sun shield (1), are positioned between the periphery bordering the recess (7) and a border of the connection opening (13).

3. Sun shield in accordance with claim 2,
**characterized in that**
the sealing means (15) are attached to the border of the connection opening (13) and, in the first end position of the sun shield (1), lie on the sun shield (1), tight up against the periphery surrounding the recess (7).

4. Sun shield in accordance with claim 2,
**characterized in that**
the sealing means (15) are attached to the periphery bordering the recess (7) and, in the first end position of the sun shield (1), lie tight against the border of the connection opening (13).

5. Sun shield in accordance with one of the preceding claims,
**characterized in that**
a plate (8) is provided in the recess (7), disposed, deeper in relation to the outer side (6) of the sun shield (1), essentially parallel to this outer side (6), whereby a gap (10) is formed, between the outer rim of the plate (8) and the periphery of the recess (7), which communicates with the inside of the sun shield (1).

6. Sun shield in accordance with claim 5,
**characterized in that**
webs (18), with which the plate (8) is held on the sun shield (1), are disposed in the gap (10).

7. Sun shield in accordance with claims 5 or 6,
**characterized in that**
a cosmetic mirror is attached to the plate (8), in the recess (7).

8. Sun shield in accordance with one of the above claims,
**characterized in that**
the ventilation openings (12) in the sun shield (1) are disposed both in the vehicle interior or windscreen side of the sun shield (1) and in the roof-side outside (6 and 9) of the sun shield (1).

9. Sun shield in accordance with one of the above claims,
**characterized in that**
that the outsides (6 and 9) of the sun shield (1) are at lest partially formed of material (17) that allows air to pass through it, or are provided with such material, this material covering the ventilation openings (12).

10. Sun shield in accordance with one of the above claims,
**characterized in that**
the connection opening (13) has displaceable laminae (14).

## Revendications

1. Pare-soleil (1) pour un véhicule automobile, qui peut pivoter au moins autour d'un axe (5) sensiblement transversal à un pare-brise du véhicule automobile entre une première position finale, dans laquelle le pare-soleil est sensiblement parallèle à un toit du véhicule (3), et une deuxième position finale, dans laquelle le pare-soleil (1) est sensiblement parallèle au pare-brise (2), le pare-soleil comprenait deo orifices d'aération (12), à travers lesquels peut se produire un échange d'air entre un intérieur de l'habitacle (4) et un intérieur du parc-soleil (1) pouvant être raccordé à un dispositif de climatisation du véhicule automobile,
**caractérisé par** les caractéristiques suivantes :
- dans une face extérieure (6) du pare-soleil (1), orientée vers le côté du toit, est prévu un évidement (7), qui communique avec l'intérieur (11) du pare-soleil (1), et
- un orifice de raccord (13) du dispositif de climatisation est réalisé dans le toit du véhicule (3) à l'intérieur de l'habitacle (4), le pare-soleil (1) pouvant être positionné dans sa première position finale contre le toit du véhicule (3) de telle sorte que l'orifice de raccord (13) et l'évidement (7) du pare-soleil (1) coincident l'un avec l'autre.

2. Pare-soleil selon la revendication 1, **caractérisé en ce qu'**il est prévu des moyens d'étanchéité (15) qui, dans la première position finale du pare-soleil (1), sont disposés entre le pourtour encadrant l'évidement (7) et un cadre délimitant l'orifice de raccord (13).

3. Pare-soleil selon la revendication 2, **caractérisé en ce que** les moyens d'étanchéité (15) sont agencée contre le cadre de l'orifice de raccord (13) et, dans la première position finale du pare-soleil (1), viennent étroitement en appui contre le pourtour encadrant l'évidement (7) au niveau du pare-soleil (1).

4. Pare-soleil selon la revendication 2, **caractérisé en ce que** les moyens d'étanchéité (15) sont agencés contre le pourtour encadrant l'évidement (7) et, dans la première position finale du pare-soleil (1), viennent étroitement en appui contre le cadre de l'orifice de raccord (13).

5. Pare-soleil selon l'une quelconque des revendications précédentes, **caractérisé en ce que** dans l'évidement (7) est prévue une platine (8), qui est agencée en profondeur par rapport à la face extérieure (6) du pare-soleil (1), orientée vers le côté du toit, et est sensiblement parallèle à ladite face extérieure (6), un orifice en forme de fente (10) étant réalisé entre le bord extérieur de la platine (8) et le pourtour de l'évidement (7), lequel orifice communique avec l'intérieur (11) du pare-soleil (1).

6. Pare-soleil selon la revendication 5, **caractérisé en ce que** dans l'orifice en fente (10) sont agencées des barrettes (18) par lesquelles la platine (8) est maintenue contre le pare-soleil (1).

7. Pare-soleil selon la revendication 5 ou 6, **caractérisé en ce qu'**un miroir de courtoisie (19) est posé dans l'évidement (7) sur la platine (8).

8. Pare-soleil selon l'une quelconque des revendications précédentes, **caractérisé en ce que** les orifices d'aération (12) dans le pare-soleil (1) sont réalisés dans le pare-soleil (1) non seulement dans la face extérieure (9) orientée vers le côté de l'intérieur de l'habitacle ou le côté du pare-brise, mais aussi dans la face extérieure (6) orientée vers le côté du toit.

9. Pare-soleil selon l'une quelconque des revendications précédentes, **caractérisé en ce que** les faces extérieures (6 et 9) du pare-soleil (1) sont réalisées au moins en partie dans un matériau (17) perméable à l'air ou sont munis d'un tel matériau qui recouvre les orifices d'aération (12).

10. Pare-soleil selon l'une quelconque des revendications précédentes, **caractérisé en ce que** l'orifice de raccord (13) comporte des lamelles (14) réglables.
